# EUROPEAN PATENT APPLICATION

(11) **EP 1 864 948 A1**
(43) Date of publication of application: **12.12.2007**
(21) Application number: 06730086.3
(22) Date of filing: 27.03.2006
(51) Int. Cl.: C01G 51/00, C09D 5/24, H01B 1/22

(54) **COMPOSITE OXIDE PARTICLE HAVING BLACK COLOR**

(30) Priority: 31.03.2005 JP 2005103724
(71) Applicant: Mitsui Mining and Smelting Co., Ltd, Shinagawa-ku, Tokyo 141-8584 (JP)
(72) Inventor: FUJIYASU, Shoichi Mitsui Mining & Smelting Co. Ltd, Tamano-shi, Okayama 7060027 (JP); KATSUYAMA, Koichi Mitsui Mining & Smelting Co. Ltd, Tamano-shi, Okayama 7060027 (JP); HOSHINO, Tomoyuki Mitsui Mining & Smelting Co. Ltd, Tamano-shi, Okayama 7060027 (JP); MIWA, Masahiro, Mitsui Mining & Smelting Co., Ltd., Tamano-shi, Okayama 7060027 (JP); SHIMAMURA, Hiroyuki Mitsui Mining& Smelting Co.Ltd, Tokyo 1418584 (JP)
(74) Representative: Forstmeyer, Dietmar
(86) International application number: PCT/JP2006/306138
(87) International publication number: WO 2006/106624

(57) **Abstract**

The complex oxide particles of the present invention are conductive and exhibit a black color. The particles contain cobalt in an amount of 40 to 65 % by mass in terms of the metal element based on the whole particles and at least one kind or two or more kinds of metals selected from copper, nickel and molybdenum. The particles are preferably prepared in the following manner: an aqueous solution of mixed metal salts prepared from water-soluble salts, wherein the aqueous solution contains cobalt and one kind or two or more kinds of metal element selected from copper, nickel and molybdenum, is mixed and neutralized with an alkali hydroxide to obtain a metal hydroxide slurry; the resultant slurry of metal hydroxides is kept at a pH of 10 to 13 and oxidized at a temperature of higher than 40°C and 60°C or less to obtain a precursor slurry; the resultant precursor slurry is aged at 80 to 150°C; and then, after solid-liquid separation, the resultant solid is heated at 400 to 700°C for longer than 1 hour and 3 hours or less.

## Description

### Technical Field

The present invention relates to black complex oxide particles, more specifically to black complex oxide particles that contain at least one kind or two or more kinds of metals selected from copper, nickel and molybdenum, and a specific amount of cobalt.

### Background Art

A conductive black pigment that is used for forming a color composite for black matrixes, or a black electrode or a light shielding layer of front panels for plasma displays, plasma addressed liquid crystal displays or the like is required to have excellent performances including electrical conductivity and to be inexpensive. In view of these circumstances, carbon black, iron oxide-based pigment including magnetite, and other complex oxide pigments have been used according to each purpose.

Nowadays, in any application described above, request has gone beyond high performance and high quality. For example, a black pigment containing metal oxide as a main component has been requested to have not only an excellent blackness but also excellent performances including oxidation resistance required in sintering process in the production of black matrixes, dispersibility in vehicles required in the preparation of a coating material using resin, solvent and others, or surface smoothness of a coating film prepared from the coating material. As a typical example of the black pigment that contains metal oxide as a main component, there may be listed particles of a single component metal oxide such as cobalt oxide, manganese oxide or copper oxide, or particles of a complex oxide such as Cu-Cr, Cu-Mn, Cu-Cr-Mn, Cu-Fe-Mn, Co-Mn-Fe or Co-Fe-Cr oxide (For example, refer to Japanese Patent Laid-Open Publication No. H9-237570 and Japanese Patent Laid-Open Publication No. H10-231441).

Regarding the single component metal oxide, particles having a larger particle size exhibit a higher blackness, but particles having a particle size in a submicrometer level exhibit a brown tint. Additionally, particles having a particle size in a submicrometer level are not easy to produce.

Regarding the complex oxide particles, they also have advantages and disadvantages from the standpoint of the performances required for a black pigment. First, a complex oxide such as Cu-Cr or Cu-Cr-Mn which contains chromium has, in addition to the problem of chromium toxicity, a disadvantage that particles in a submicrometer level are not easy to produce.

Further, as disclosed in Japanese Patent Laid-Open Publication No. H9-237570, microparticulation of complex oxide particles of Cu-Mn is easy, but the particles tends to have an irregular form and easily aggregate, resulting in poor dispersibility in the preparation of a coating material containing the particle and poor surface smoothness of a coating film.

As also disclosed in Japanese Patent Laid-Open Publication No. H9-237570, complex oxide particles of Cu-Fe-Mn have a high blackness and are excellent in dispersibility because they have good uniformity in shape. Complex oxide particles of Co-Mn-Fe as disclosed in the aforementioned Japanese Patent Laid-Open Publication No. H10-231441 have good uniformity in shape and are excellent in dispersibility. However, since both particles described above contain iron (blackness of the particles depends on Fe²⁺, and they are easily degraded with time), it is said that both particles are poor in weather resistance and oxidation resistance.

As mentioned above, there have not been known to date a satisfactory conductive black pigment containing a metal oxide as a main component, which is excellent in blackness and electrical conductivity and has a good balance among oxidation resistance, dispersibility in the preparation of a coating material, and surface smoothness of a coating film prepared from the coating material.

### Disclosure of the Invention

Therefore, it is an object of the present invention to provide black complex oxide particles suitable mainly as a conductive black pigment for a color composition for black matrixes, or for a black electrode or a light shielding layer of front panels for plasma displays, plasma addressed liquid crystal displays or the like.
Further, it is another object of the present invention to provide black complex oxide particles excellent in balance among oxidation resistance, dispersibility in the preparation of a coating material, and surface smoothness of a coating film prepared from the coating material.

As a result of intensive studies on a material that contains various kinds of metal oxides as a main component, the present inventors have found that the above objects are accomplished with specific complex oxide particles that contain at least one kind or two or more kinds of metals selected from copper, nickel and molybdenum, and a specific amount of cobalt, and completed the present invention.

Namely, the complex oxide particles of the present invention is characterized in that the particles contain at least one kind or two or more kinds of metals selected from copper, nickel and molybdenum, and cobalt in an amount of 40 to 65 % by mass in terms of the metal element based on the whole particles.

### Best Mode for Carrying Out the Invention

Embodiments for carrying out the present invention will be described hereinafter. The complex oxide particles of the present invention contain at least one kind or two or more kinds of metals selected from copper, nickel and molybdenum, and cobalt in an amount of 40 to 65 % by mass in terms of the metal element based on the whole particles.

In the examination of such conductive black pigments as in the present invention, the present inventors have prepared various types (composition) of complex oxide particles and the complex oxide particles obtained have had a shape of plate, granular or irregular form. However, it has been a rare occasion that such an adequate conductive black pigment as in the present invention is formed.

In the process of producing complex oxide particles, conductive complex oxide particles having an adequate blackness are formed when at least one kind or two or more kinds of metals selected from copper, nickel and molybdenum are involved and the content of cobalt is 40 to 65 % by mass in terms of the metal element based on the whole particles.

It is not clear why the complex oxide particles according to the present invention that contain at least one kind or two or more kinds of metals selected from copper, nickel and molybdenum and further contains cobalt are excellent in balance between blackness and conductivity. The present inventors have found that it is important to specify the kinds of elements contained in the complex oxide to attain such an excellent balance between blackness and conductivity.

In practice, even though any element besides copper, nickel and molybdenum was made to be contained in cobalt oxide particles, black particles were sometimes formed but they were not conductive. On the other hand, conductive particles were sometimes formed but they were not black particles. Particles satisfying both blackness and conductivity have not been found.

It is important for the complex oxide particles of the present invention to have a cobalt content of 40 to 65 % by mass in terms of the metal element based on the whole particles. At a content of less than 40 % by mass, blackness is insufficient. When the content exceeds 65 % by mass, blackness is certainly sufficient, but conductivity is insufficient. Considering the balance between conductivity and blackness, the content is required to be 50 to 65 % by mass.

The complex oxide particles of the present invention have a total amount of copper, nickel and molybdenum of preferably 10 to 30 % by mass in terms of the metal element based on the whole particles. When the total amount is out of the above range, the effect of enhancing blackness and conductivity may become insufficient or the balance between them may be lost.

The complex oxide particles of the present invention preferably have a crystal structure of a spinel or inversed-spinel type in view of exerting stable performance.

The complex oxide particles of the present invention have a particle shape of preferably plate form. The particles of plate form preferably have one or more recesses on the plane portion thereof, more preferably from 3 to less than 20 recesses per particle. The complex oxide particles of the present invention shaped in any form may be used. However, for example, spherical particles have an excellent stable dispersibility in the preparation of a coating material, but have troubles to some extent in electrical conductivity after coating. Therefore, plate-form particles that are expected to exhibit an effect of plane contact are preferable. Further, when the particles are dispersed in a vehicle containing resin or the like, the vehicle is incorporated into the recesses on the particle surface, whereby the dispersibility of the particles may be desirably increased.

The recesses on the plate-form particle surface as described above may be identified by the image of a scanning electron microscope (hereinafter, abbreviated as SEM). A SEM image is taken at a magnification of 40,000. From the appearance of the particles given by the resultant picture, the recesses can be identified.

In the complex oxide particles of the present invention, the plate-form particles have preferably 3 to 20 recesses per particle on the plane portion thereof. When the number of recesses is less than 3, the effect of electrical conductivity is not fully exhibited, which is undesirable. On the other hand, when the number of recesses exceeds 20, the mechanical strength of the particles becomes lowered, whereby the particles are undesirably likely to collapse in the preparation of a coating material by dispersing the particles. The number of the recesses described above is more preferably from 5 to 15. Within this range, an adequate balance between electrical conductivity and mechanical strength of the particles may be attained.

The complex oxide particles of the present invention have an average particle diameter of preferably 0.1 to 1 µm. The coating material prepared from such fine black complex oxide particles provides a coating film with an excellent surface smoothness and a high gloss.

The complex oxide particles of the present invention have a BET specific surface area of preferably 10 to 50 m²/g. At a BET specific surface area of less than 10 m²/g, the particles themselves become too large in size and this sometimes leads to a failure of poor tinting strength of a coating material containing the particles. When the BET specific surface area exceeds 50 m²/g, the surface smoothness of a coating film prepared from a coating material containing the particles becomes poor. Further such a too fine particle sometimes causes lowering in blackness. In addition, the complex oxide particles of the present invention have an amount of oil absorption of preferably 20 to 40 ml/100 g. The complex oxide particles of the present invention having low oil absorption are less aggregated, allowing the particles to have an adequate dispersibility in a coating material.

The complex oxide particles of the present invention have a bulk density of preferably 0.1 to 0.5 g/cm³. At a bulk density of less than 0.1 g/cm³, the particles are not easy to handle in the preparation of a coating material containing the particles, and also a large volume container is undesirably required for storage. On the other hand, when the bulk density exceeds 0.5 g/cm³, the particles become easy to aggregate and aggregation sometimes inhibits dispersibility.

The coating layer containing the complex oxide particles of the present invention has a tint of preferably 18 to 23 in terms of "L" value on a coated paper. When the "L" value of the coating layer is larger than 23, blackness becomes undesirably insufficient. On the other hand, the coating layer with an "L" value of less than 18 is not easy to obtain in practice.

The complex oxide particles of the present invention have an electrical resistivity of preferably 10⁰ to 10² Ω·cm. Electrical resistivity less than 10⁰ Ω·cm is difficult to attain in practice. On the other hand, electrical resistivity over 10² Ω·cm is undesirable because the electrical conductivity becomes insufficient.

Hereinafter, a preferred method for producing the complex oxide particles according to the present invention will be described next. The complex oxide particles of the present invention may be produced in the following manner: an aqueous solution of mixed metal salts prepared from water-soluble salts, wherein the aqueous solution contains at least cobalt and one kind or two or more kinds of metal element selected from copper, nickel and molybdenum, is mixed and neutralized with an alkali hydroxide to obtain a metal hydroxide slurry; the resultant slurry of metal hydroxides is kept at a pH of 10 to 13 and oxidized at a temperature of higher than 40°C and 60°C or less to obtain a precursor slurry; the resultant precursor slurry is aged at 80 to 150°C; and then, after solid-liquid separation, the resultant solid is heated at 400 to 700°C for longer than 1 hour and 3 hours or less.

In the present invention, a water-soluble salt containing cobalt and one or two or more water-soluble salts containing a metal element selected from copper, nickel and molybdenum are used. In the preparation of the aqueous solution of mixed metal salts, the amount of the cobalt salt is important as described above, in order for the resultant complex oxide particles to acquire adequate blackness and secure conductivity. The amount of the metal salts of copper, nickel and molybdenum used is also important as described above. Specifically, it is desirable that the aqueous solution of mixed metal salts is prepared in such a manner that the total amount of copper, nickel and molybdenum in the complex oxide particles becomes 10 to 30 % by mass in terms of the metal element based on the whole particles, in order for the resultant complex oxide particles to acquire adequate blackness and secure conductivity.

In order to dissolve the metal salts to be used in an aqueous solution, the temperature of the aqueous solution is preferably regulated at 30 to 60°C. At lower than 30°C, undissolved metal salts are likely to remain in the aqueous solution, whereby a complex hydroxide having a non-uniform composition may be formed when the aqueous solution is mixed with an alkali hydroxide. At a temperature of higher than 60°C, the size of nuclei tends to be non-uniform, and eventually the resultant complex oxide particles are inferred to have a non-uniform particle size.

Note that, there is no particular limitation of the metal salts used for the preparation of the above aqueous solution so long as they are water-soluble metal salts such as sulfates, nitrates, carbonates, or chlorides. Any metal salt that matches the property of the reaction system may be used. Taking into consideration the productivity and the like, the metal ion concentration in the aqueous solution may be controlled in the range of about 0.5 to 2.0 mol/L as the total metal ion concentration.

A mixed metal aqueous solution thus obtained is mixed with an alkali hydroxide to prepare a mixed hydroxide slurry.

The alkali hydroxide used in the neutralization is preferably a caustic alkali such as sodium hydroxide or potassium hydroxide. Mixing and neutralization may be carried out in any manner, but it is preferred that the alkali hydroxide is added to the aqueous solution of mixed metal salts. The addition is completed within 60 to 120 minutes so as to obtain particle nuclei of the mixed hydroxide having a uniform composition. The addition time shorter than 60 minutes tends to cause formation of hydroxide having nonuniform composition or formation of particles with a shape of irregular form. When the addition time exceeds 120 minutes, a mixed hydroxide having uniform composition may be formed, but the nuclei keep growing and particles with a shape of irregular from are likely to be formed.

The pH of the resultant mixed hydroxide slurry is adjusted in the range of 10 to 13, and an appropriate oxidizing agent such as hydrogen peroxide is added, or oxygen-containing gas, preferably air, is bubbled into the slurry so as to form black complex oxide particles in the slurry. The reaction temperature is preferably higher than 40°C and 60°C or less. At a temperature of 40°C or less, the resultant particles are likely to become fine in particle size and blackness is likely to decrease. At a temperature higher than 60°C, particles having a shape of irregular form are likely to be formed frequently.

Oxidation is continued until the oxidation-reduction potential in the slurry reaches an equilibrium. The resultant slurry is heated to 80 to 150°C. After heating, the slurry is stirred at 80 to 100°C for 1 to 6 hours or treated at 100 to 150°C in an autoclave or the like so as to age the complex oxide particles in the slurry. This aging process is important to allow the reaction to proceed and to form particulates. At an aging temperature lower than 80°C (lower than 100°C in the case of using an autoclave), the reaction does not easily proceed, so that granular particles may not develop and particles having a shape of irregular form are likely to be formed. At an aging temperature higher than 100°C (higher than 150°C in the case of using an autoclave), a larger reaction rate is likely to cause a wider particle size distribution of resultant particles, which is undesirable.

After the fully-aged slurry containing complex oxide particles (that is, the precursor) is subject to conventional filtering, washing, and dehydration processes, the resultant solid is dried at 50 to 120°C, and then deagglomerated. The complex oxide particles thus obtained (that is, the precursor) are heat-treated at 400 to 700°C for longer than 1 hour and 3 hours or less so as to stabilize their shape. When the heating time is 1 hour or less, the shape of the oxide is not stabilized, so that the hue of the resultant particles is likely to become poor. When the heating time exceeds 3 hours, tinting strength is likely to decrease because of sintering of the particles. The complex oxide particles obtained after the heat treatment sometimes partly aggregate. In that case, conventional disaggregation treatments can be applied to the particles.

At a heating temperature lower than 400°C, the shape of the oxide is not stabilized, and this may lead to losing stability in various characteristics of the particles. At a heating temperature higher than 700°C, blackness or hue may become poor because of excess load of heat. Either atmosphere of air or an inert gas may be used for the heat treatment.

A formed article such as an electrode prepared from a conductive black coating material containing the complex oxide particles of the present invention is excellent in blackness, electrical conductivity, oxidation resistance, and uniformity and gloss of a sintered film. The conductive black coating material is suitably used for display devices such as plasma displays or plasma addressed liquid crystal displays.

### Example

The present invention will be illustrated in more detail with reference to Examples, etc. in the followings.

### EXAMPLE 1

As is shown in Table 1, 10 mol of cobalt (II) sulfate and 5 mol of copper (II) sulfate were dissolved in 10 liters of water (solution A). On the other hand, a sodium hydroxide aqueous solution (10 liters) with pH adjusted at 10.9 was prepared (solution B). Then, solution A was added to solution B over 90 minutes at a constant speed. During this addition, 1N sodium hydroxide aqueous solution was added as appropriate in order to keep the pH of the mixed solution at 10.9. When the addition was completed, the temperature of the solution was adjusted at 50°C, and then the air was blown into the solution at a rate of 1 L/min for 2 hours to perform oxidation thereby to form precursor particles. Further, the resultant slurry of the precursor particles was heated at 80°C for 2 hours for aging. The resultant slurry was filtered off, washed, and dried using conventional methods to obtain a solid substance. The solid substance was dried, and then heated at 580°C for 2 hours in the air. In this way, complex oxide particles containing copper were obtained. The particles thus obtained were evaluated by the following methods. The results are shown in Table 2.

Methods of evaluation
(a) Co, Cu, Ni and Mo content based on the whole particles:
   A sample was dissolved and measured with ICP.
(b) Average particle diameter:
   A SEM (scanning electron microscope) image was taken at a magnification of 100,000, and a Ferret diameter was measured for 200 particles using the image.
(c) Particle shape and number of recesses in the plane portion of the particle:
   A SEM (scanning electron microscope) image was taken at a magnification of 100,000, and the shape and number of recesses were evaluated for 30 observable particles selected randomly using the image.
(d) Specific surface area:
   Specific surface area was measured with BET surface area analyzer (model 2200) supplied by Shimadzu-Micromeritics.
(e) Bulk density:
   A sample that was not subjected to preliminary treatments such as sieving was put in a vessel with a volume of 100 cm³ and weighed to evaluate a weight per unit volume.
(f) Electrical resistivity:
   Ten grams of a sample were put in a holder and molded into a 25 mm diameter pellet by pressing at 600 kg/cm²; after electrodes were attached to the pellet, the electrical resistivity was measured while the pellet was pressed at 150 kg/cm²; and then, the electrical resistivity of the particle was calculated from the thickness and cross-sectional area of the sample and electrical resistivity measured.
(g) Oil absorption:
   Oil absorption was measured in accordance with JIS K 5101.
(h) Blackness and Hue:
   Blackness of particles was measured in accordance with JIS K5101-1991. To 2.0 grams of a sample was added 1.4 cc of castor oil, and the resultant mixture was kneaded with a Hoover automatic muller; to 2.0 grams of the kneaded sample were added 7.5 grams of lacquer; after the sample was further kneaded, it was coated on a mirror-coated paper with a 4 mil applicator; after the coating was dried, blackness ("L" value) and hue ("a" value, "b" value) were measured with a color difference meter (trade name: color analyzer-TC-1800, supplied by TOKYO DENSHOKU CO., LTD.).
(i) Specular reflectance (gloss associated with surface smoothness of a coating film):
   Sixty grams of a solution obtained by dissolving styrene-acrylic resin (TB-1000F) in toluene (resin: toluene = 1 : 2), 10 grams of a sample after heat treatment, and 90 grams of glass beads with a diameter of 1 mm were put in a bottle having a volume of 140 ml, and after the bottle was capped, they were mixed with a coating material shaker (supplied by TOYO SEIKI CO., LTD.) for 30 minutes. The resultant coating material was coated on a glass plate with a 4 mil applicator and dried. The blackness was measured with a color difference meter. The reflectance at 60 degrees was measured with a MURAKAMI GLOSS METER GM-3M.

### EXAMPLES 2 to 5 and COMPARATIVE EXAMPLES 1 to 3

Complex oxide particles were obtained in the same manner as in EXAMPLE 1, except that each condition for production is changed as shown in Table 1. The resultant complex oxide particles were evaluated for various characteristics in the same manner as in EXAMPLE 1. The results are shown in Table 2.

**[Table 1]**

| | Preparation of mixed metal salt aqueous solution | | | | | Neutralization time | Oxidation conditions | | Aging temperature | Heat treatment conditions | |
|---|---|---|---|---|---|---|---|---|---|---|---|
| | Cobalt sulfate | Copper sulfate | Nickel sulfate | Sodium molybdate | Total amount of reaction mixture | | pH | Temperature | | Temperature | Time |
| | mol | mol | mol | mol | mol | min | | °C | °C | °C | hr |
| Example 1 | 10 | 5 | | | 10 | 90 | 10.9 | 50 | 80 | 580 | 2 |
| Example 2 | 10 | | 2 | | 10 | 120 | 12.1 | 40 | 130 | 420 | 1 |
| Example 3 | 10 | | | 1 | 10 | 60 | 12.8 | 60 | 95 | 680 | 3 |
| Example 4 | 10 | 2 | 1 | | 10 | 90 | 10.9 | 50 | 80 | 580 | 2 |
| Example 5 | 10 | 1 | 1 | 1 | 10 | 90 | 10.9 | 50 | 80 | 580 | 2 |
| Comparative Example 1 | 10 | | | | 10 | 90 | 10.9 | 50 | 80 | 580 | 2 |
| Comparative Example 2 | 10 | 3 | 3 | 3 | 10 | 90 | 10.9 | 50 | 80 | 580 | 2 |
| Comparative Example 3 | 10 | 0.2 | 0.2 | 0.2 | 10 | 90 | 10.9 | 50 | 80 | 580 | 2 |

**[Table 2]**

| | Cobalt content | Second element content | Particle shape | Number of recesses in plane portion of the particle | Average particle diameter | BET Specific surface area | Bulk density | Electrical resistivity | Oil absorption | Blackness, hue | Specular reflectance |
|---|---|---|---|---|---|---|---|---|---|---|---|
| | % by mass | % by mass | | | µm | m²/g | g/cm³ | Ω·cm | ml/100 g | L, a, b values | % |
| Example 1 | 52.1 | Cu:28.1 | platy | 7 | 0.5 | 17 | 0.18 | 4.6×10¹ | 28 | 20.9, -0.3, -0.2 | 89 |
| Example 2 | 63.3 | Ni:13.0 | platy | 6 | 0.7 | 18 | 0.37 | 6.4×10⁰ | 24 | 22.5,-0.7,-0.9 | 93 |
| Example 3 | 61.9 | Mo:10.2 | platy | 4 | 0.2 | 37 | 0.11 | 8.7×10¹ | 37 | 18.4, +0.4, +0.5 | 82 |
| Example 4 | 57.1 | Cu:12,1 Ni:6,8 | platy | 12 | 0.9 | 13 | 0.44 | 2.4×10¹ | 22 | 20.1, -0.2, -0.2 | 90 |
| Example 5 | 42.2 | Cu:5.3, Ni:4.5, Mo:7.1 | platy | 18 | 0.5 | 17 | 0.21 | 1.9×10¹ | 31 | 21.5, -0.2, -0.3 | 91 |
| Comparative Example 1 | 71,5 | - | particulate | None | 0.5 | 17 | 0.19 | 7.6×10⁵ | 24 | 21.1, -0.2, -0.1 | 90 |
| Comparative Example 2 | 35.4 | Cu:11.2, Ni:10.0, Mo:17.6 | platy | 25 | 0.5 | 18 | 0.19 | 1.1×10¹ | 43 | 25.1,+1.5,+2.1 | 73 |
| Comparative Example 3 | 69.4 | Cu:1.1, platy Ni:1.2, Mo:2.5 | | 1 | 0.5 | 16 | 0.22 | 2.1×10³ | 28 | 21.5, -0.2, -0.3 | 80 |

As is apparent from Table 2, the complex oxide particles of Examples were excellent in blackness, electrical conductivity, hue, oxidation resistance, dispersibility in the preparation of a coating material containing the particles, and surface smoothness of a coating film of the coating material. From the results of XRD measurement, although not shown in the table, it was confirmed that the complex oxide particles of Examples had a crystal structure of spinel type.

In contrast, the cobalt oxide particles of Comparative Example 1 were sufficient in blackness, but poor in conductivity because the particles did not contain any of copper, nickel, and molybdenum.

The particles of Comparative Example 2 contained copper, nickel and molybdenum, but their total amount was too much, so that the cobalt content became lowered. As a result, satisfactory conductivity was obtained, but blackness was poor.

The particles of Comparative Example 3 contained copper, nickel and molybdenum, but their total amount was small, so that the cobalt content became too high. As a result, satisfactory blackness was obtained, but conductivity was low.

### Industrial Applicability

As mentioned above in detail, the black complex oxide particles according to the present invention are excellent in blackness and electrical conductivity, having an adequate balance among oxidation resistance, dispersibility in the preparation of a coating material, surface smoothness of a coating film prepared from the coating material, and the like, so that the particles are suitable as a black pigment for forming a color composition for black matrixes, or a black electrode or a light-shielding layer of front panels for plasma displays, plasma addressed liquid crystal displays or the like. Further, a formed article such as an electrode that is formed from a conductive black coating material containing the complex oxide particles is excellent in blackness, electrical conductivity, oxidation resistance, and uniformity and gloss of a sintered film.

## Claims

1. Black complex oxide particles comprising cobalt in an amount of 40 to 65 % by mass in terms of the metal element based on the whole particles, and at least one kind or two or more kinds of metals selected from copper, nickel and molybdenum.

2. The complex oxide particles according to claim 1, wherein the total amount of copper, nickel and molybdenum is 10 to 30 % by mass in terms of the metal element based on the whole particles.

3. The complex oxide particles according to claim 1, having a shape of a plate form.

4. The complex oxide particles according to claim 3, wherein the particle has a recess on the plane potion thereof, and the number of the recess ranges from 3 to 20 per particle.

5. The complex oxide particles according to claim 1, having an average particle diameter of 0.1 to 1 µm.

6. The complex oxide particles according to claim 1, having a specific surface area of 10 to 50 m²/g.

7. The complex oxide particles according to claim 1, having a bulk density of 0.1 to 0.5 g/cm³.

8. The complex oxide particles according to claim 1, wherein a coating layer containing the particles has a tint of 18 to 23 in terms of "L" value on a coated paper.

9. The complex oxide particles according to claim 1, having an electrical resistivity of 10⁰ to 10² Ω·cm.

10. The complex oxide particles according to claim 1, having an oil absorption amount of 20 to 40 ml/100 g.
